Europäisches Patentamt

European Patent Office

Office européen des brevets

(11) Numéro de publication: **0 320 410**
**A1**

# DEMANDE DE BREVET EUROPEEN

(21) Numéro de dépôt: **88420401.7**

(51) Int. Cl.⁴: **H 02 M 7/538**

(22) Date de dépôt: **01.12.88**

(30) Priorité: **09.12.87 FR 8717273**

(43) Date de publication de la demande:
**14.06.89 Bulletin 89/24**

(84) Etats contractants désignés: **DE GB IT**

(71) Demandeur: **MERLIN GERIN**
**Rue Henri Tarze**
**F-38050 Grenoble Cédex (FR)**

(72) Inventeur: **Lavieville, Jean-Paul**
**Merlin Gerin - Sce. Brevets**
**F-38050 Grenoble Cedex (FR)**

**Parzy, Dominique**
**Merlin Gerin - Sce. Brevets**
**F-38050 Grenoble Cedex (FR)**

**Jardez, Denis**
**Merlin Gerin - Sce. Brevets**
**F-38050 Grenoble Cedex (FR)**

(74) Mandataire: **Kern, Paul et al**
**Merlin Gerin Sce. Brevets 20, rue Henri Tarze**
**F-38050 Grenoble Cédex (FR)**

(54) **Dispositif de commande d'un interrupteur statique.**

(57) Un semi-conducteur de puissance (T1,T2), en parallèle avec une diode (D1,D2) montée en inverse, alimentant une charge Z, est commandé par le signal (B1,B2) de sortie d'une porte ET dont une première entrée reçoit un signal (S1,S2) de commande et dont la seconde entrée est reliée à un circuit (28) de détection des instants de passage à zéro du courant dans la charge. Selon le sens du déphasage courant/tension dans la charge, soit la mise en conduction du semi-conducteur est retardée par rapport au signal de commande associé, jusqu'au passage à zéro du courant dans la charge, soit son blocage est avancé au passage à zéro de ce courant par rapport au signal de commande associé. Dans un montage en demi-pont comportant deux semi-conducteurs (T1,T2) en série, on définit de cette manière un temps mort autoadaptatif entre le blocage de l'un des transistors et la mise en conduction de l'autre.

Fig 1

EP 0 320 410 A1

**Description**

# DISPOSITIF DE COMMANDE D'UN INTERRUPTEUR STATIQUE

L'invention concerne un dispositif de commande d'un interrupteur statique constitué par au moins un semi-conducteur de puissance , unidirectionnel en courant, ayant deux électrodes de puissance et au moins une électrode de commande et pouvant être commandé par application de signaux de tension, de polarisations différentes sur l'électrode de commande de manière à prendre soit un état de conduction, soit un état de blocage, une diode étant disposée en parallèle et en inverse entre les électrodes de puissance du semi-conducteur, celui-ci étant connecté à une charge, le dispositif de commande comportant un étage de commande délivrant des signaux de commande à deux états correspondants respectivement à un ordre de conduction et à un ordre de blocage.

L'invention est en particulier destinée aux convertisseurs statiques, par exemples onduleurs, alimentations à résonance, comportant plusieurs interrupteurs statiques montés en demi-pont ou en pont, monophasé ou polyphasé. Dans chaque demi-pont élémentaire, constitué par deux interrupteurs statiques disposés en série aux bornes d'une tension d'alimentation de puissance, il est indispensable de commander les interrupeurs de manière à éviter leur conduction simultanée. En effet, en cas de conduction simultanée la valeur du courant dans le demi-pont est limitée uniquement par les impédances parasites et peut entraîner la destruction des composants.

Il est connu d'introduire un temps mort fixe entre le blocage de l'un des interrupteurs et la mise en conduction de l'autre. Le temps mort doit tenir compte des valeurs maximums des temps de transition des composants, tant au blocage qu'à la mise en conduction des semi-conducteurs. Il est donc fonction du type de semi-conducteur utilisé, des conditions du fonctionnement, notamment de la température, de la fréquence et du courant, et doit également tenir compte des circuits d'aide à la commutation. Cette solution pose des problèmes de fonctionnement liés à la présence d'états indéfinis lorsqu'aucun des interrupteurs n'est commandé, la durée de cet état indéfini variant avec les conditions de fonctionnement du circuit. Cette variation conduit notamment à de mauvaises performances de la régulation du convertisseur, à une limitation de sa fréquence de fonctionnement et à une limitation du rapport cyclique.

Le brevet FR-A 2441290 propose, par ailleurs, un dispositif de commande d'un convertisseur statique dans lequel un transistor de puissance ne passe à un état de conduction que lorsque la tension collecteur-émetteur de ce transistor est voisine de zéro. Ce dispositif n'est utilisable que dans le cas d'une charge inductive et nécessite un circuit auxiliaire d'aide au démarrage.

L'invention a pour but un dispositif de commande d'un interrupteur statique résolvant les problèmes mentionnés ci-dessus quel que soit le type de charge utilisée.

Selon l'invention, le dispositif de commande est caractérisé en ce qu'il comporte une porte logique ET dont la sortie est connectée à l'électrode de commande et dont une première entrée est reliée à l'étage de commande, une seconde entrée de la porte ET étant reliée à un circuit de détection des instants de passage à zéro du courant dans la charge, de manière à ce que l'un des états du semi-conducteur soit commandé par le signal de commande associé, le passage à l'autre état du semi-conducteur étant effectué lors du passage à zéro du courant dans la charge en présence d'un ordre de conduction du signal de commande.

Ce dispositif de commande est utilisable pour une charge de type inductif. Dans ce cas, le courant dans la charge est en retard par rapport à la tension à ses bornes et, par rapport à l'application du signal de commande, la mise en conduction du semi-conducteur est retardée jusqu'au passage à zéro du courant dans la charge, son blocage étant normalement commandé par les signaux de commande. Dans ce cas, le circuit selon l'invention permet en outre de limiter au maximum les pertes énergétiques à l'amorçage de l'interrupteur et d'étendre en fréquence le domaine de fonctionnement de l'interrupteur.

Le même dispositif est utilisable quel que soit le type de charge, en particulier lorsque la charge est constituée par un circuit oscillant comme c'est le cas, dans les alimentations à résonance. Dans ce type d'alimentations, le déphasage tension-courant dans la charge est fonction de la fréquence de fonctionnement.Pour une fréquence de fonctionnement supérieure à la fréquence de résonance, le courant dans la charge est en retard par rapport à la tension comme dans le cas d'une charge inductive. Par contre, dans le cas où la fréquence de fonctionnement est inférieure à la fréquence de résonance , le courant dans la charge est en avance par rapport à la tension aux bornes de la charge. C'est alors la mise en conduction du semi-conducteur qui est normalement commandée par les signaux de commande, son blocage étant avancé, par rapport à la fin du signal de commande, au passage à zéro du courant dans la charge.

Selon un premier mode de réalisation le circuit de détection des instants de passage à zéro du courant dans la charge délivre un signal représentatif du signe du courant.

Selon un second mode de réalisation, ce circuit délivre un signal représentatif du déphasage entre la tension et le courant dans la charge.

Quel que soit le type de charge utilisée, le dispositif de commande ne nécessite aucun circuit auxiliaire d'aide au démarrage.

L'invention peut être utilisée pour la commande de deux interrupteurs statiques disposés en série dans un montage en demi-pont. L'étage de commande, commun aux deux interrupteurs statiques, délivre des premier et second signaux de commande de rapport cyclique prédéterminé, de préférence complémentaires. Le circuit de détection des instants de passage à zéro délivre des premier et second signaux représentatifs des instants de passage à zéro alternés du courant dans la charge. Les premiers signaux sont appliqués aux entrées de l'une des portes ET, les seconds étant appliqués aux entrées de la porte ET associée à l'autre interrupteur statique. On crée ainsi un temps mort, que l'on peut qualifier d'autoadaptatif, entre le blocage de l'un des interrupteurs et la mise en conduction de l'autre. Ce temps mort tient automatiquement compte des caractéristiques des divers composants du montage.

Le même principe de commande peut être utilisé pour la commande d'un convertisseur constitué par quatre interrupteurs montés en pont. La régulation de la puissance de sortie du convertisseur peut alors être obtenue soit par variation de la fréquence des signaux de commande, soit par modulation de largeur d'impulsion, les signaux de commande associés aux interrupteurs d'un demi-pont étant alors décalés d'une durée réglable par rapport aux signaux de commande des interrupteurs de l'autre demi-pont.

D'autres avantages et caractéristiques ressortiront plus clairement de la description qui va suivre de plusieurs modes de réalisation de l'invention, donnés à titre d'exemples non limitatifs et représentés aux dessins annexés sur lesquels:

La figure 1 illustre, sous forme de schéma bloc, un onduleur monophasé en demi-pont dont chaque interrupteur statique est contrôlé par un dispositif de commande selon l'invention.

Les figures 2a à 2r illustrent les formes d'onde des différents signaux du circuit selon la figure 1 dans le cas où le courant dans la charge est en retard par rapport à la tension aux bornes de la charge.

Les figures 3a à 3r illustrent les formes d'onde des mêmes signaux que les figures 2a à 2r dans le cas où le courant dans la charge est en avance par rapport à la tension aux bornes de la charge.

La figure 4 représente un mode de réalisation d'un circuit de détermination du signe du courant utilisable dans le circuit de détection des instants de passage à zéro du dispositif selon la figure 1.

La figure 5 représente un mode de réalisation d'un circuit de détermination du déphasage.

La figure 6 représente un montage en pont selon l'invention.

Les figures 7a à 7q, 8a à 8q et 9a à 9q illustrent les formes d'ondes des différents signaux du circuit selon la figure 6, en fonction du déphasage entre le courant et la tension dans la charge, lorsque la régulation de la puissance de sortie est réalisée par modulation de largeur d'impulsions.

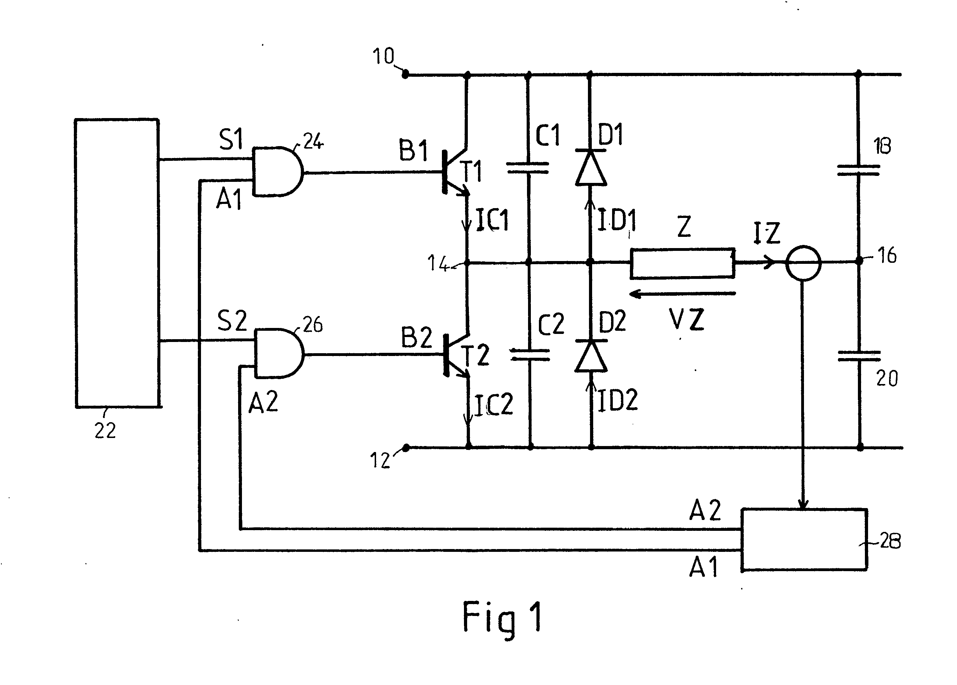

Sur la figure 1, un onduleur monophasé en demi-pont comporte, de manière classique, deux transistors de puissance T1 et T2 montés en série entre deux bornes 10 et 12 entre lesquelles est appliquée une tension d'alimentation continue +E pouvant atteindre plusieurs centaines de volts. Le point 14 de jonction des deux transistors est connecté par une charge Z au point milieu 16 connecté aux bornes 10 et 12 par deux condensateurs 18 et 20 de même capacité.

Des diodes D1 et D2 de récupération d'énergie sont respectivement connectées en parallèle sur les jonctions émetteur-collecteur des transistors T1 et T2, de manière à être normalement polarisées en inverse. Dans le cas où la charge Z est de type inductif des condensateurs C1 et C2 d'aide à la commutation sont de préférence diposés, en parallèle, respectivement sur les diodes D1 et D2.

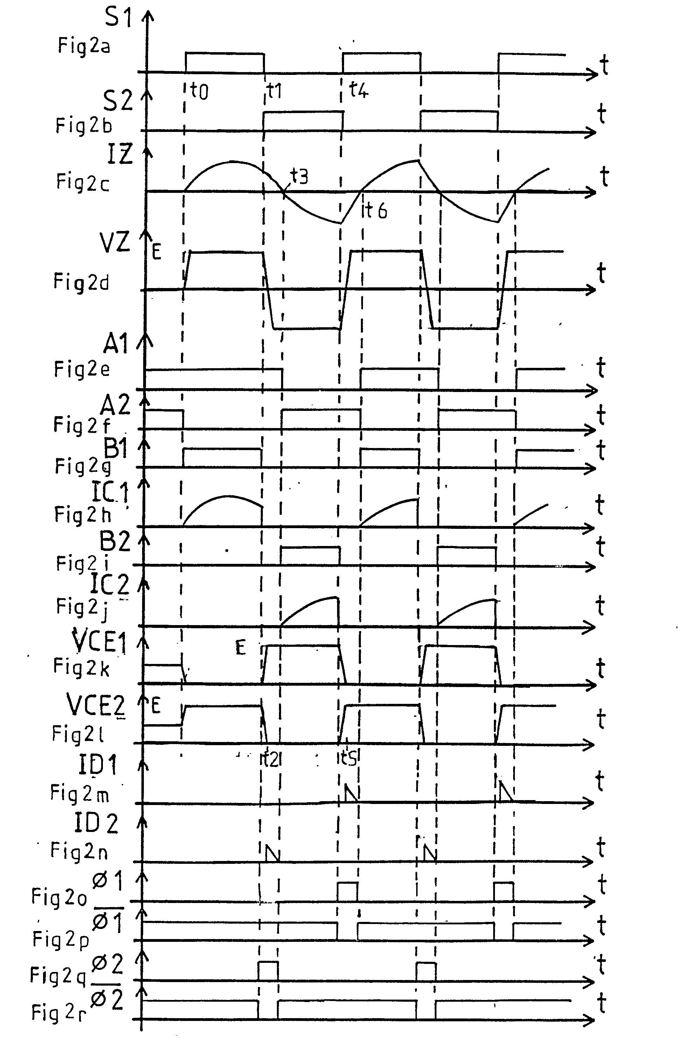

Dans les convertisseurs classiques de ce type, les deux transistors de puissance T1 et T2 sont commandés par des signaux de commande respectifs S1 et S2 fournis par un étage de commande 22 et représentés aux figures 2a et 2b. Ces signaux sont de préférence complémentaires, de durée égale à une demi-période, (rapport cyclique 0,5), la variation de la fréquence permettant de contrôler la puissance de sortie de l'onduleur.

Selon l'invention un circuit logique ET, respectivement 24 et 26, est interposé entre l'étage de commande 22 et la base de chacun des transistors T1 et T2.

Le circuit ET 24 dont la sortie est connectée à la base du transistor T1 reçoit sur une première entrée le signal S1, et sur une seconde entrée un signal A1 qui lui est fourni par un circuit 28 de détection des instants de passage à zéro du courant dans la charge. De même, le circuit ET 26 dont la sortie est reliée à la base du transistor T2 reçoit sur une première entrée le signal S2 et sur une seconde entrée un signal A2 fourni par le circuit 28.

Dans le mode de réalisation représenté sur la figure 1 le circuit 28 reçoit en entrée un signal proportionnel au courant IZ circulant dans la charge Z.

Selon ce premier mode de réalisation, les signaux logiques A1 et A2 sont représentatifs du signe du courant IZ, A1 étant à un niveau haut lorsque IZ est positif ou nul et A2 à un niveau haut lorsque IZ est négatif ou nul.

La figure 2 illustre les formes d'onde des différents signaux obtenus avec un circuit selon la figure 1 lorsque le courant IZ (figure 2c) dans la charge est en retard par rapport à la tension VZ (figure 2d) aux bornes de la charge, par exemple dans le cas d'une charge inductive.

Dans ce cas, qui est le cas le plus général, chacun des transistors T1 et T2 est bloqué par le front descendant du signal de commande, S1 ou S2, associé, sa mise en conduction étant par contre retardée par rapport au front ascendant dudit signal et ne s'effectuant qu'au moment où le signal de commande ayant une valeur correpondant à la conduction, le courant IZ dans la charge passe par zéro. Un temps mort, que l'on peut qualifier d'autoadaptatif, est ainsi obtenu entre le blocage de l'un des transistors et la mise en conduction de l'autre.

Le fonctionnement de ce premier mode de réalisation peut se résumer de la manière suivante:

Au démarrage, les transistors T1 et T2 étant bloqués, les condensateurs C1 et C2 se chargent à une tension E/2. Le courant IZ et la tension VZ sont alors nuls. Les signaux A1 et A2 (figures 2e et 2f) sont donc tous deux au niveau logique 1.

A l'instant t0, le signal S1 de commande de la mise en conduction du premier transistor T1 passe au niveau logique 1. Le signal B1 (figure 2g) de sortie de la porte ET 24 passe donc au niveau logique 1, provoquant la mise en conduction du transistor T1. Un courant IC1 (figure 2h) ,circule alors dans le transistor T1 et est égal au courant IZ, positif, dans la charge Z. Le signal A2 passe alors au niveau logique 0.

A l'instant t1, le signal S1 passe au niveau logique 0, entraînant le blocage de T1. Simultanément le signal S2 passe au niveau logique 1 mais, A2 étant toujours au niveau logique 0, B2 (figure 2i) reste au niveau logique 0 et la mise en conduction du transistor T2 est retardée jusqu'à l'instant t3 de passage à zéro du courant IZ dans la charge.

Entre les instants t1 et t3, les deux transistors T1 et T2 sont bloqués. Après une première période de transition, t1-t2, très courte, (de l'ordre de la microseconde) pendant laquelle le condensateur C1 se charge tandis que le condensateur C2 se décharge, le courant de charge IZ passe par la diode D2. Les figures 2k et 2l illustrent respectivement les formes d'onde des signaux VCE1 et VCE2 correspondant aux tensions émetteur- collecteur des transistors T1 et T2, les figures 2m et 2n représentant respectivement les courants ID1 et ID2 dans les diodes D1 et D2.

A l'instant t3, l'énergie accumulée dans la charge a été restituée à la source et le courant IZ s'annule. Le signal A2 passe donc au niveau logique 1 et, S2 étant également au niveau logique 1 depuis l'instant t1, le signal B2 passe au niveau logique 1 et commande alors la mise en conduction du transistor T2.

On remarque que lors de la mise en conduction de T2, à l'instant t3, la tension VCE2 aux bornes de ce transistor est pratiquement nulle, en réalité - 0,7V correspondant à la conduction de la diode D2, depuis l'instant t2, réduisant ainsi les pertes énergétiques lors de la commutation. Dans le mode de réalisation représenté, la tension E est de l'ordre de plusieurs centaines de volts et la figure 2l ne permet pas de distinguer la variation de tension entre le moment où le transistor T2 est conducteur (t3-t4) et celui où D2 conduit (t2-t3).

A l'instant t4, le signal de commande S2 passe au niveau logique 0, commandant le blocage de T2. Comme précédemmemt, il y a d'abord montée de la tension (VCE2) aux bornes du transistor (T2) venant d'être bloqué et abaissement de la tension (VCE1) aux bornes de l'autre transistor (T1), jusqu'à ce que la diode opposée (D1) commence à conduire, à l'instant t5.

La mise en conduction de l'autre transistor (T1) est retardée jusqu'à l'instant t6 de passage à zéro du courant dans la charge.

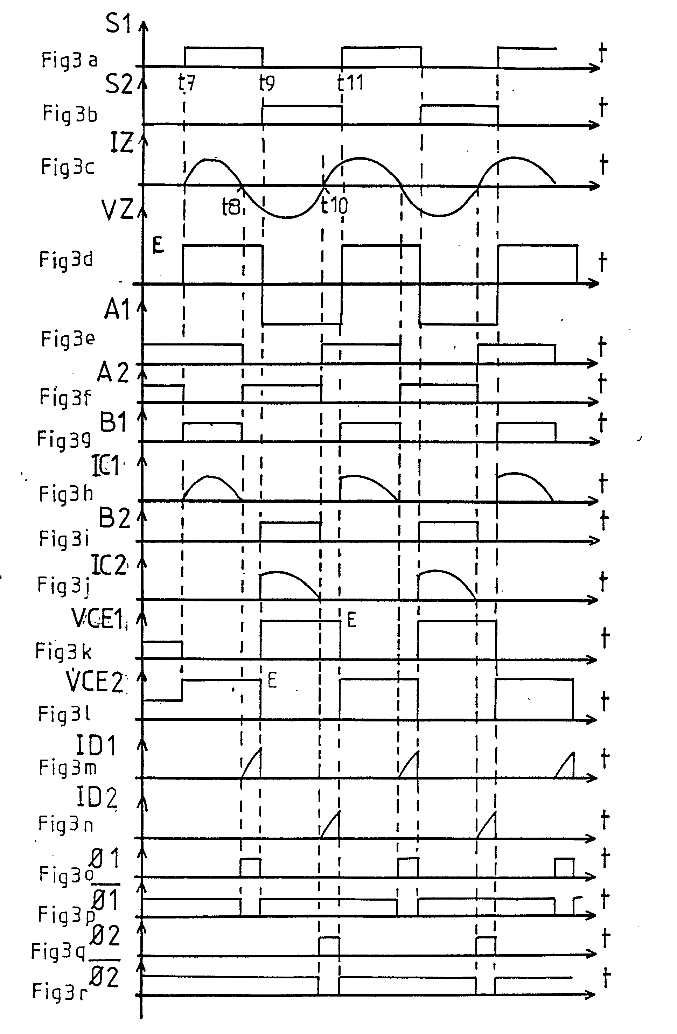

Les figures 3a à 3n illustrent les mêmes signaux que les figures 2a à 2n dans le cas où le courant dans la charge est en avance par rapport à la tension aux bornes de la charge.

Dans ce cas, après un fonctionnement identique au démarrage, le passage à zéro du courant IZ à l'instant t8, précédant la fin à l'instant t9 de l'impulsion S1 de commande de la conduction du transistor T1, provoque le passage au niveau logique 0 du signal A1 et, en conséquence, du signal B1 et le blocage du transistor T1. L'inversion du courant IZ dans la charge provoque la conduction de la diode D1 jusqu'à l'instant t9 de l'amorçage du transistor T2, lors du passage au niveau logique 1 du signal de commande S2. Le transistor T2 reste conducteur jusqu'au prochain passage à zéro du courant IZ, à l'instant t10, la diode D2 devenant alors conductrice jusqu'à l'amorçage, à l'instant t11 du transistor T1.

Il ressort clairement des figures 2 et 3 et de la description qui précède que le même dispositif de commande, recevant de l'étage de commande 22 les mêmes signaux de commande S1 et S2, fonctionne quelle que soit la nature de la charge. Dans le cas ou la charge est telle que le courant IZ dans la charge est en retard sur la tension à ses bornes (figure 2), les signaux S1 et S2 commandent normalement respectivement le blocage des transistors T1 et T2, leur mise en conduction étant retardée, par rapport au front ascendant du signal de commande associé, jusqu'au passage à zéro du courant IZ. Dans le cas où la charge est telle que le courant IZ dans la charge est en avance sur la tension à ses bornes (figure 3) les signaux S1 et S2 commandent normalement respectivement la mise en conduction des transistors T1 et T2, leur blocage étant avancé, par rapport au front descendant du signal de commande associé, au moment du passage à zéro du courant IZ.

On définit ainsi dans tous les cas un temps mort autoadaptatif entre le blocage de l'un des transistors et l'amorçage de l'autre.

Il convient de remarquer que dans tous les cas il n'y a aucun problème pour le démarrage du circuit, les signaux A1 et A2, étant tous deux au niveau logique 1 tant que le courant IZ dans la charge est nul et permettant la mise en conduction de l'un des transistors (T1 ou T2) dès que l'un des signaux de commande (S1 ou S2) passe au niveau logique 1.

Dans le cas d'une charge inductive, ou lorsque le déphasage tension-courant est positif, le dispositif permet de plus de réduire au maximum les pertes énergétiques, la tension VCE aux bornes du transistor étant voisine de zéro lors de sa mise en conduction. En réalité cette tension est de - 0,7V correspondant à la tension aux bornes de la diode montée en parallèle sur le transistor lorsqu'elle est passante. Ceci permet de simplifier au maximum le circuit d'aide à la commutation monté en parallèle sur le transistor, qui peut être constitué d'un simple condensateur (C1,C2). On supprime donc à la fois les pertes énergétiques à la mise en conduction et les pertes énergétiques dans le circuit d'aide à la commutation. Dans certains cas limites, il sera même possible de supprimer totalement le circuit d'aide à la commutation.

Par contre, dans le cas où la charge conduit à une avance du courant sur la tension (figure 3), déphasage négatif, cet avantage de réduction des pertes énergétiques n'existe plus et le circuit d'aide à la commutation devra être adapté en conséquence si les transistors ne peuvent supporter les pointes de courant à leur mise en conduction.

Cependant, dans la plupart des applications le déphasage est positif et un déphasage négatif ne se produit que dans des conditions limites de fonctionnement, par exemple lors d'un fonctionnement à vide dans une alimentation à résonance. Il est alors intéressant de pouvoir commander les transistors sans modifier la commande, même si les conditions de fonctionnement ne sont pas optimales, notamment du point de vue des pertes énergétiques à la mise en conduction des transistors.

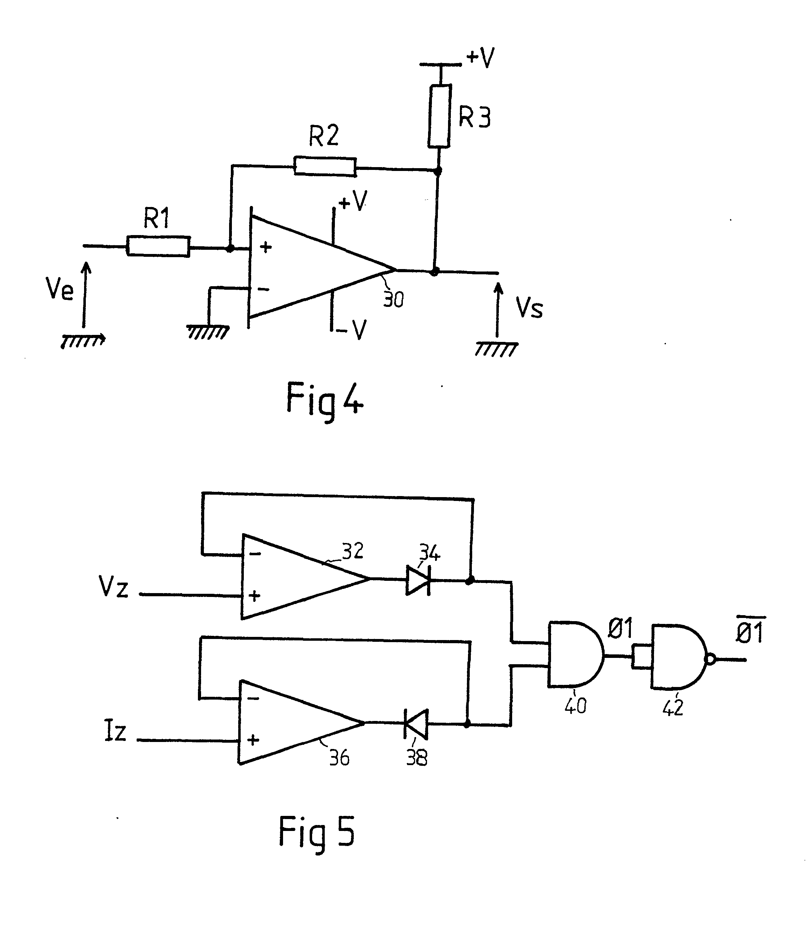

Sur la figure 4 on a représenté un mode de réalisation possible d'un circuit de détermination du signe du courant pouvant être utilisé dans le circuit 28 de détection des instants de passage à zéro du courant IZ dans la charge. Ce circuit est constitué par un amplificateur opérationnel 30 dont l'entrée négative est reliée à la masse. Une tension d'entrée Ve, proportionnelle au courant IZ, est appliquée à son entrée positive par l'intermédiaire d'une résistance R1. L'entrée positive est de plus reliée à sa sortie par une résistance R2, la sortie étant par ailleurs connectée, par l'intermédiaire d'une résistance R3 à une tension d'alimentation +V. De cette manière, la tension Vs de sortie est égale à +V lorsque la tension d'entrée Ve, et en conséquence le courant IZ, est négative, l'amplificateur opérationnel étant saturé. Lorsque IZ, et donc Ve, est nul, on a Vs = V. R2/R2+R3. Il est facile de mettre en forme la tension Vs pour produire le signal A2 qui est au niveau logique 1 lorsque Vs est positif, c'est à dire lorsque IZ est nul ou négatif, et à un niveau logique 0 lorsque Vs est négatif, c'est à dire lorsque IZ est positif.

Le même circuit, précédé d'un inverseur, de manière à ce que son signal d'entrée Ve soit proportionnel à - IZ, peut être utilisé pour produire le signal A1, qui est à un niveau logique 1 lorsque Vs est positif, c'est à dire lorsque IZ est nul ou positif.

Selon un autre mode de réalisation de l'invention (non représenté), le circuit de détection des instants de passage à zéro du courant fournit des signaux représentatifs du déphasage entre la tension VZ aux bornes de la charge et le courant IZ dans la charge.

En effet, les figures 2o,3o, respectivement 2q,3q, représentent les signaux $\phi$1 et $\phi$2 de déphasage, respectivement lorsque la tension VZ est positive et négative. Les figures 2p,3p et 2r,3r représentant les signaux $\overline{\phi}$1 et $\overline{\phi}$2 complémentaires des signaux $\phi$1 et $\phi$2, il est clair que les fronts ascendants des signaux $\overline{\phi}$1 et $\overline{\phi}$2 correspondent aux passages à zéro du courant dans le cas d'un déphasage positif (figure 2), tandis que c'est le cas de leurs fronts descendants dans le cas d'un déphasage négatif (figure 3). Ces signaux $\overline{\phi}$1 et $\overline{\phi}$2 peuvent donc de manière analogue aux signaux A1 et A2, être appliqués aux secondes entrées des circuits ET 24 et 26 dont les premières entrées reçoivent les signaux S1 et S2, de manière à former les signaux B1 et B2. Bien entendu, dans ce mode de réalisation le circuit de détection des instants de passage à zéro du courant devra comporter une première entrée sur laquelle est appliquée une mesure du courant IZ et une seconde entrée sur laquelle est appliquée une mesure de la tension VZ.

La figure 5 illustre un mode de réalisation particulier d'un circuit de détermination du déphasage.

Ce circuit comporte un premier amplificateur opérationnel 32, dont la sortie est connectée à l'anode d'une diode 34 dont la cathode est connectée à son entrée négative. Un signal représentatif de la tension VZ est appliqué sur son entrée positive. Cet amplificateur opérationnel 32 constitue ainsi un redresseur dont la sortie est à un niveau logique haut lorsque VZ est positif. Un second amplificateur opérationnel 36 est combiné à une diode 38 de manière à constituer un redresseur dont la sortie est à un niveau logique haut lorsque la tension, proportionnelle à IZ, appliquée sur son entrée positive est négative. Les signaux de sortie des deux redresseurs sont combinés par une porte ET 40 de manière à former le signal de déphasage $\phi$1 qui est à un niveau logique haut lorsque VZ est positif tandis que IZ est négatif (figures 2c,2d,2o et 3c,3d,3o).

Un inverseur 42 connecté à la sortie de la porte 40 permet d'obtenir le signal complémentaire $\overline{\phi}$1.

Les signaux $\phi$2 et $\overline{\phi}$2 peuvent être obtenus de manière analogue par application du signal représentatif de VZ sur l'entrée positive de l'amplificateur opérationnel 36 et du signal représentatif de IZ sur l'entrée positive de l'amplificateur opérationnel 32. Le signal $\phi$2 est alors à un niveau logique haut lorsque VZ est négatif tandis que IZ est positif (figures 2c,2d,2q et 3c,3d,3q).

Bien entendu les circuits représentés aux figures 4 et 5 ne sont donnés qu'à titre d'exemple nullement limitatif , tout circuit permettant d'obtenir les signaux A1 et A2 à partir de IZ ou $\overline{\phi}$1 et $\overline{\phi}$2 à partir de IZ et VZ pouvant être utilisé.

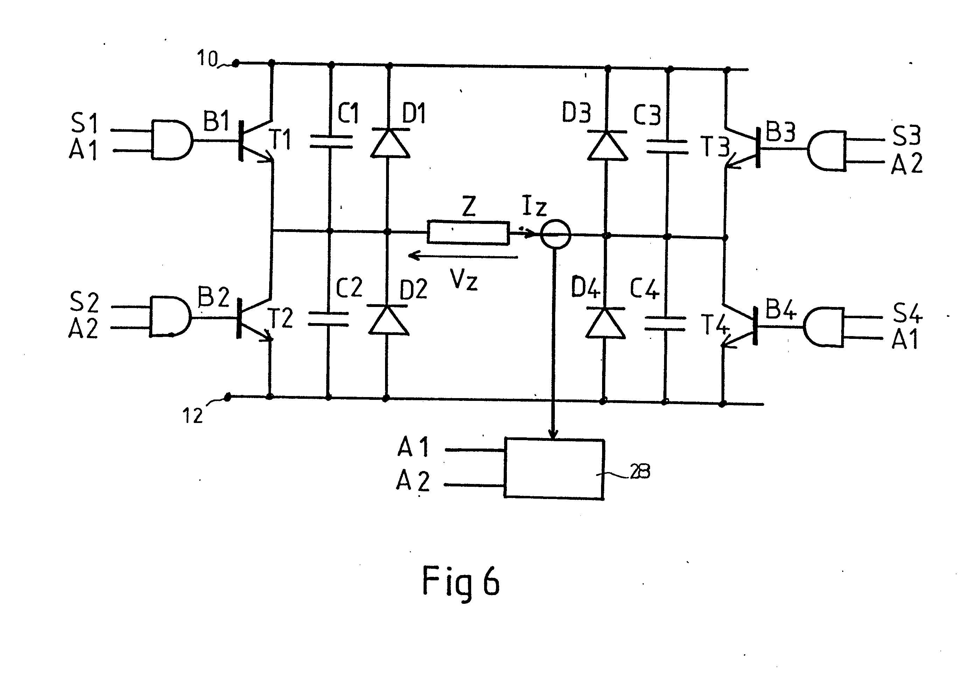

Dans la description qui précède, l'invention a été décrite en relation avec deux transistors montés en demi-pont. La figure 6 illustre un montage en pont à quatre transistors T1,T2,T3 et T4 utilisant le même principe.

Les transistors T1 et T2 sont commandés comme précédemment par les signaux B1 et B2, avec B1 = S1A1 et B2 = S2A2 ou B1 = S1$\overline{\phi}$1 et B2 = S2$\overline{\phi}$2.

Dans le cas d'un montage en pont on peut, comme précédemment régler la puissance de sortie du montage en modifiant la fréquence des signaux de commande S1,S2,S3 et S4. Dans ce cas le transistor T4 est commandé par les mêmes signaux que le transistor T1 et le transistor T3 par les mêmes signaux que le transistor T2. On a donc S3 = S2 et B3 = S3A2 ou B3 = S3$\overline{\phi}$2 et S4 = S1 et B4 = S4A1 ou B4 = S4$\overline{\phi}$1. Les formes d'onde obtenues sont alors identiques à celles représentées sur les figures 2 et 3 pour les transistors T1 et T2 et on obtient de la même manière un temps mort autoadaptatif entre le blocage et l'amorçage des transistors T3 et T4.

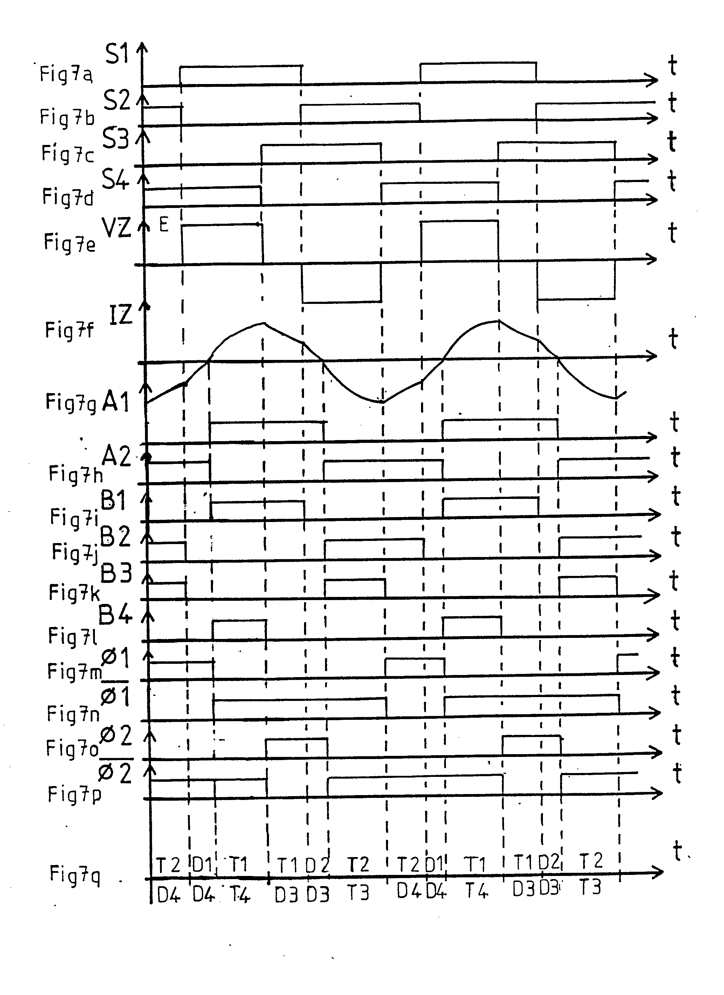

La régulation de la puissance de sortie peut également être réalisée par modulation de largeur d'impulsion, les signaux de commande S3,S4 associés aux transistors T3 et T4 du second demi-pont étant décalés d'une durée réglable par rapport aux signaux de commande S1,S2 des transistors T1 et T2 du premier demi-pont. Les figures 7 à 9 illustrent les formes d'onde des différents signaux dans un montage en pont commandé par modulation de largeur d'impulsion.

Sur chacune des figures les signaux S1 et S2 sont identiques aux signaux S1 et S2 des figures 2 et 3. Le signal S3 est décalé d'une durée θ par rapport à S1, S4 étant décalé de la même durée θ par rapport à S2.

Pour faciliter la compréhension du fonctionnement du montage en pont, les figures 7q,8q et 9q indiquent à chaque instant quels sont les transistors et/ou les diodes qui sont conducteurs.

Quelle que soit la charge, et en conséquence le déphasage, on peut former les signaux B1,B2,B3 et B4 en faisant :

$$B1 = S1.A1 = S1.\overline{\phi}1$$
$$B2 = S2.A2 = S2.\overline{\phi}2$$
$$B3 = S3.A2 = S3.\overline{\phi}2$$
$$B4 = S4.A1 = S4.\overline{\phi}1$$

avec $\phi 1$ au niveau logique 1 lorsque VZ est positif ou nul et IZ négatif, et $\phi 2$ au niveau logique 1 lorsque VZ est négatif ou nul et IZ positif, A1 au niveau logique 1 lorsque IZ est positif ou nul et A2 au niveau logique 1 lorsque IZ est négatif ou nul.

On peut vérifier que lorsque le déphasage est positif (figure 7) le fonctionnement de chaque demi-pont (T1,T2 et T3,T4) est identique à celui représenté sur la figure 2, le blocage d'un transistor étant normalement commandé par le signal S de commande associé, tandis que sa mise en conduction est retardée, par rapport au signal de commande associé, jusqu'au passage à zéro du courant dans la charge.

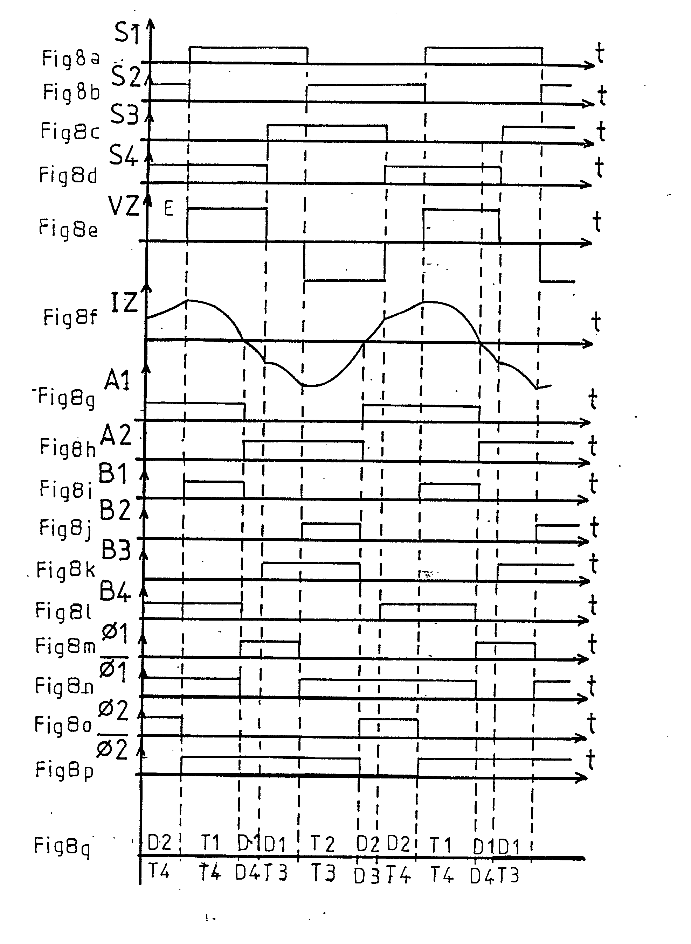

De même, lorsque le déphasage est négatif (figure 8), chaque demi-pont fonctionne de manière identique à celle représentée sur la figure 3, la mise en conduction d'un transistor étant normalement commandée par le signal S de commande associé et son blocage avancé, par rapport au signal de commande associé, au passage à zéro du courant dans la charge.

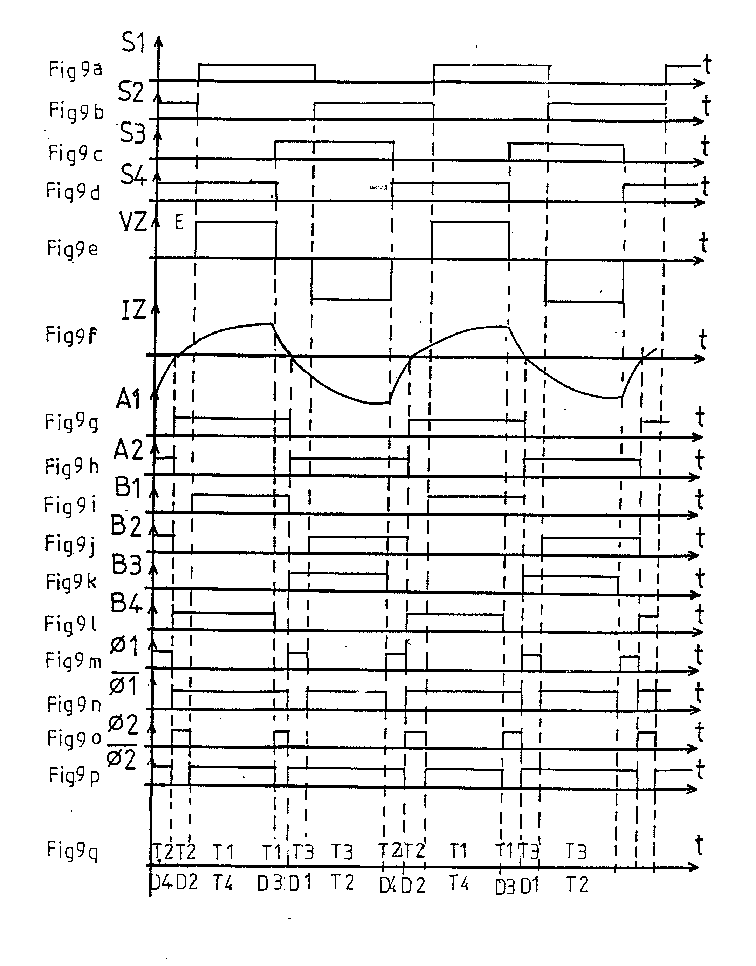

Dans le cas intermédiaire représenté sur la figure 9, lorsque le courant IZ dans la charge passe à zéro pendant la période où la tension VZ dans la charge est nulle, c'est à dire pendant la période de chevauchement des signaux de commande S1 et S3 ou S2 et S4, le premier demi-pont (T1,T2) se comporte comme lorsque le déphasage est négatif (figure 3), la mise en conduction des transistors T1 et T2 étant normalement commandée par les signaux de commande S1 ou S2 et leur blocage avancé au passage à zéro du courant dans la charge par rapport au signal de commande associé, tandis que le second demi-pont (T3,T4) se comporte comme lorsque le déphasage est positif (figure 2), la mise en conduction des transistors T3 et T4 étant retardée jusqu'au passage à zéro du courant IZ dans la charge par rapport au signal de commande associé et leur blocage normalement commandé par les signaux de commande S3 ou S4.

On obtient donc bien un temps mort autoadaptatif, défini par les instants de passage à zéro du courant dans la charge, entre les deux transistors de chaque demi-pont, quel que soit le déphasage introduit par la charge et que la régulation de la puissance de sortie soit faite par variation de la fréquence des signaux S de commande ou par variation de largeur d'impulsion (figures 7 à 9).

Bien que l'invention ait été décrite en référence à des transistors de puissance, elle s'applique à tout semi-conducteur, unidirectionnel en courant, ayant deux électrodes de puissance et au moins une électrode de commande et pouvant être commandé par application de tensions de polarisations différentes sur l'électrode de commande de manière à prendre soit un état de conduction, soit un état de blocage. Un tel semi-conducteur peut être aussi bien un transistor à effet de champ, un thyristor blocable (GTO), un transistor de type MOS ou une association de plusieurs semi-conducteurs, par exemple en parallèle, en montage darlington, cascode... Ce semi-conducteur est associé avec une ou plusieurs diodes de manière à former un interrupteur statique bidirectionnel en courant.

Un étage d'adaptation et de mise en forme des signaux logiques de commande, de type classique, est, si nécessaire, intercalé entre la porte ET et l'électrode de commande du semi-conducteur associé.

## Revendications

1. Dispositif de commande d'un interrupteur statique constitué par au moins un semi-conducteur de puissance (T1,T2,T3,T4), unidirectionnel en courant, ayant deux électrodes de puissance et au moins une électrode de commande et pouvant être commandé par application de signaux de tension (B1,B2,B3,B4) de polarisations différentes sur l'électrode de commande de manière à prendre soit un état de conduction, soit un état de blocage, une diode (D1,D2,D3,D4) étant disposée en parallèle et en inverse entre les électrodes de puissance du semi-conducteur, celui-ci étant connecté à une charge (Z), le dispositif de commande comportant un étage de commande (22) délivrant des signaux (S1,S2,S3,S4) de commande à deux états, correspondant respectivement à un ordre de conduction et à un ordre de blocage, dispositif caractérisé en ce qu'il comporte une porte logique ET (24,26) dont la sortie est connectée à l'électrode de commande et dont une première entrée est reliée à l'étage de commande (22), une seconde entrée de la porte ET étant reliée à un circuit (28) de détection des instants de passage à zéro du courant (IZ) dans la charge (Z), de manière à ce que le passage à l'un des états du semi-conducteur soit commandé par le signal de commande associé, le passage à l'autre état du semi-conducteur étant effectué lors du passage à zéro du courant dans la charge en présence d'un ordre de conduction du signal de commande.

2. Dispositif selon la revendication 1, caractérisé en ce que le circuit (28) de détection des instants de passage à zéro du courant (IZ) dans la charge délivre des signaux (A1,A2) représentatifs du signe du courant.

3. Dispositif selon la revendication 2, caractérisé en ce que le circuit (28) de détection des instants de passage à zéro du courant (IZ) dans la charge délivre un premier signal (A1) lorsque le courant (IZ) est positif ou nul et/ou un second signal (A2) lorsque le courant (IZ) est négatif ou nul.

4. Dispositif selon la revendication 1, caractérisé en ce que le circuit (28) de détection des instants de passage à zéro du courant (IZ) dans la charge délivre des signaux ($\phi$1, $\phi$2, $\bar\phi$1, $\bar\phi$2) représentatifs du déphasage entre la tension (VZ) aux bornes de la charge et le courant (IZ) dans la charge.

5. Dispositif selon la revendication 4, caractérisé en ce que le circuit (28) de détection des instants de passage à zéro du courant (IZ) dans la charge délivre un premier signal ($\phi$1) lorsque la tension (VZ) aux bornes de la charge est positive ou nulle et que le courant (IZ) dans la charge est négatif et/ou un second signal ($\phi$2) lorsque ladite tension (VZ) est négative ou nulle et que ledit courant (IZ) est positif.

6. Dispositif selon l'une quelconque des revendications 1 à 5, caractérisé en ce qu'il comporte un circuit d'aide à la commutation constitué par un condensateur (C1,C2,C3,C4) disposé en parallèle sur les électrodes de puissance du semi-conducteur (T1,T2,T3,T4).

7. Convertisseur statique comportant deux interrupteurs statiques en série (T1,D1; T2,D2), disposés en demi-pont aux bornes d'une tension continue d'alimentation de puissance et alimentant une charge (Z), caractérisé en ce que chaque interrupteur statique est associé à un dispositif de commande selon l'une quelconque des revendications 1 à 6, l'étage de commande (22) étant commun aux deux interrupteurs statiques et délivrant des premier et second signaux (S1,S2 ou S3,S4) de commande complémentaires, le circuit (28) de détection des instants de passage à zéro du courant délivrant des premier (A1 ou $\bar\phi$1) et second signaux (A2 ou $\phi$2) représentatifs des instants de passage à zéro alternés du courant dans la charge, lesdits premiers signaux (S1, A1 ou $\phi$1) étant appliqués aux entrées de la porte ET (24) associée à l'un des interrupteurs statiques (T1,D1), lesdits seconds signaux (S2,A2 ou $\phi$2) étant appliqués aux entrées de la porte ET (26) associée à 1 autre interrupteur statique (T2,D2).

8. Convertisseur statique constitué par quatre interrupteurs statiques (T1,D1; T2,D2; T3,D3; T4,D4) disposés en pont, caractérisé en ce qu'il est constitué par deux demi-ponts selon la revendication 7, l'étage de commande (22) commun aux quatre interrupteurs statiques délivrant des premier, second, troisième et quatrième (S1,S2,S3,S4) signaux de commande appliqués respectivement à une première entrée des circuits ET associés à chacun des interrupteurs statiques, et les premiers (A1 ou $\bar\phi$,1) signaux de sortie du circuit commun (22) de détection des instants de passage à zéro du courant dans la charge étant appliqués à la seconde entrée des circuits ET associés à l'un (T1,D1) des interrupteurs statiques d'un premier demi-pont et à l'interrupteur statique opposé (T4,D4) du second demi-pont, les seconds (A2 ou $\bar\phi$2) signaux de sortie du circuit commun (22) de détection des instants de passage à zéro du courant dans la charge étant appliqués à la seconde entrée des circuits ET associés à l'autre (T2,D2) interrupteur statique du premier demi-pont et à l'interrupteur statique (T3,D3) opposé du second demi-pont.

9. Convertisseur statique selon la revendication 8, caractérisé en ce que le premier signal (S1) de commande de l'un des interrupteurs statiques (T1,D1) du premier demi-pont est identique au quatrième signal (S4) de commande de l'interrupteur statique opposé (T4,D4) du second demi-pont, le second signal (S2) de commande de l'autre interrupteur statique (T2,D2) du premier demi-pont, complémentaire dudit premier (S1) signal de commande, étant identique au troisième signal (S3) de commande de l'autre interrupteur statique (T3,D3) du second demi-pont, la régulation de la puissance de sortie du convertisseur étant effectuée par variation de la fréquence desdits signaux de commande.

10. Convertisseur selon la revendication 8, caractérisé en ce que les troisième et quatrième signaux (S3,S4) de commande des interrupteurs statiques de l'un des demi-pont sont décalés d'une durée ($\theta$) réglable par rapport aux premier et second signaux (S1,S2) de commande des interrupteurs statiques de l'autre demi-pont, de manière à obtenir une régulation de la puissance de sortie du convertisseur par modulation de largeur d'impulsion.

Fig 1

EP 0 320 410 A1

Fig 2a — S1
Fig 2b — S2
Fig 2c — IZ
Fig 2d — VZ
Fig 2e — A1
Fig 2f — A2
Fig 2g — B1
Fig 2h — IC1
Fig 2i — B2
Fig 2j — IC2
Fig 2k — VCE1
Fig 2l — VCE2
Fig 2m — ID1
Fig 2n — ID2
Fig 2o — Ø1
Fig 2p — Ø1̄
Fig 2q — Ø2
Fig 2r — Ø2̄

Fig 3 a — S1

Fig 3 b — S2

Fig 3 c — IZ

Fig 3 d — VZ / E

Fig 3 e — A1

Fig 3 f — A2

Fig 3 g — B1

Fig 3 h — IC1

Fig 3 i — B2

Fig 3 j — IC2

Fig 3 k — VCE1

Fig 3 l — VCE2

Fig 3 m — ID1

Fig 3 n — ID2

Fig 3 o — Ø1

Fig 3 p — $\overline{Ø1}$

Fig 3 q — Ø2

Fig 3 r — $\overline{Ø2}$

Fig 4

Fig 5

Fig 6

EP 0 320 410 A1

Fig7a — S1

Fig7b — S2

Fig7c — S3

Fig7d — S4

Fig7e — VZ

Fig7f — IZ

Fig7g — A1

Fig7h — A2

Fig7i — B1

Fig7j — B2

Fig7k — B3

Fig7l — B4

Fig7m — $\varnothing 1$

Fig7n — $\overline{\varnothing 1}$

Fig7o — $\varnothing 2$

Fig7p — $\overline{\varnothing 2}$

Fig7q

Fig8a S1
Fig8b S2
Fig8c S3
Fig8d S4
Fig8e VZ E
Fig8f IZ
Fig8g A1
Fig8h A2
Fig8i B1
Fig8j B2
Fig8k B3
Fig8l B4
Fig8m Ø1
Fig8n $\overline{Ø1}$
Fig8o Ø2
Fig8p $\overline{Ø2}$
Fig8q

Fig 9a — S1

Fig 9b — S2

Fig 9c — S3

Fig 9d — S4

Fig 9e — VZ

Fig 9f — IZ

Fig 9g — A1

Fig 9h — A2

Fig 9i — B1

Fig 9j — B2

Fig 9k — B3

Fig 9l — B4

Fig 9m — Ø1

Fig 9n — $\overline{Ø1}$

Fig 9o — Ø2

Fig 9p — $\overline{Ø2}$

Fig 9q

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | DE-A-3418885 (T. NOMURA) <br> * abrégé * <br> * page 1, ligne 13 - ligne 15 * <br> * page 7, ligne 13 - ligne 26; figure 4 * | 1 | H02M7/538 |
| A | | 2, 7 | |
| | --- | | |
| A | PATENT ABSTRACTS OF JAPAN <br> vol. 6, no. 128 (E-118) 1006 14 juillet 1982, <br> & JP-A-57 55772 (TOKYO SHIBAURA DENKI K.K.) 02 <br> avril 1982, <br> * voir le document en entier * | 1-3, 8 | |
| | --- | | |
| A | EP-A-8053 (K.D. NUTZ) <br> * abrégé * | 1-3 | |
| | --- | | |
| A | US-A-4700285 (J.S. SZEPESI) <br> * colonne 1, ligne 37 - ligne 41 * | 1 | |
| | --- | | |
| D,A | FR-A-2441290 (H. FOCH ET AL) | | |
| | ------ | | |

**DOMAINES TECHNIQUES RECHERCHES (Int. Cl.4 )**

H02M

Le présent rapport a été établi pour toutes les revendications

| Lieu de la recherche | Date d'achèvement de la recherche | Examinateur |
|---|---|---|
| LA HAYE | 02 MARS 1989 | MOUEZA A.J.L. |

EPO FORM 1503 03.82 (P0402)